Europäisches Patentamt

European Patent Office

Office européen des brevets

(11) Numéro de publication: **0 483 718 A1**

# DEMANDE DE BREVET EUROPEEN

(21) Numéro de dépôt: **91118335.8**

(22) Date de dépôt: **28.10.91**

(51) Int. Cl.5: **H01B 3/30**, C08G 73/14, C08G 18/34

(30) Priorité: **30.10.90 FR 9013452**

(43) Date de publication de la demande:
**06.05.92 Bulletin 92/19**

(84) Etats contractants désignés:
**AT CH DE ES FR GB IT LI NL SE**

(71) Demandeur: **GEC ALSTHOM SA**
**38, avenue Kléber**
**F-75116 Paris(FR)**

(72) Inventeur: **Anton, Alain**
**rue de Beauregard, Chaponnay**
**F-69360 Satin-Symphorien-d'Ozon(FR)**
Inventeur: **Wagner, Richard**
**Lancin**
**F-38510 Courtenay(FR)**
Inventeur: **Mansoux, Sandrine**
**23, avenue Général Leclerc**
**F-69100 Villeurbanne(FR)**

(74) Mandataire: **Weinmiller, Jürgen et al**
**Lennéstrasse 9 Postfach 24**
**W-8133 Feldafing(DE)**

(54) **Application de vernis d'émaillage polyamide-imides à l'isolation de conducteurs méplats ou de gros diamètre, et conducteurs isolés méplats ou de gros diamètre ainsi obtenus.**

(57) Application d'un vernis à base de polyamide-imide à la fabrication d'émaux isolants pour conducteurs électriques méplats ou de diamètre supérieur à 1,5 mm.

Le vernis comprend le produit de condensation supérieur à 1,5 mm, dans laquelle le vernis comprend le produit de condensation d'un isocyanate aromatique, éventuellement additionné d'un isocyanate aliphatique ou cycloaliphatique, avec un acide ou anhydride polycarboxylique aromatique à au moins trois fonctions carboxyliques, additionné d'au moins un composé du groupe formé par les diacides aliphatiques ou cycloaliphatiques, les diacides esters formés à partir desdits diacides et de dialcools aliphatiques et des diacides aliphatiques contenant dans leur structure des ponts éther, en proportion molaire de 10% à 80% de ce composé pour 90% à 20% d'acide ou anhydride polycarboxylique aromatique. Conducteurs électriques isolés comprenant un émail obtenu à partir d'un tel vernis.

EP 0 483 718 A1

Rank Xerox (UK) Business Services
(−/2.18/2.1)

La présente invention concerne l'isolation des conducteurs électriques méplats ou de gros diamètre, supérieur à 1,5 mm, et les conducteurs isolés ainsi obtenus.

Les isolants pour de tels conducteurs doivent présenter de meilleures propriétés que ceux convenant pour les conducteurs de faible diamètre, et en particulier à la fois une excellente souplesse pour conserver leur adhérence sur le conducteur, une bonne résistance chimique, notamment aux solvants, et une bonne résistance thermique, tout en étant d'un prix de revient peu élevé.

On a proposé jusqu'ici pour cette application des vernis de constitutions chimiques différentes, mais dont aucun ne présente à la fois toutes les propriétés requises. Les vernis acétoformals de polyvinyle sont de résistance thermique limitée à la classe E(120°C). Les vernis polyesters et polyesterimides sont de mise en place difficile sur le conducteur et de tenue à l'hydrolyse médiocre. Les vernis polyesters ou polyesterimides modifiés par les polyhydantoïnes, qui ont fait l'objet du brevet FR-B-2 255 331, présentent de bonnes propriétés, mais sont coûteux, et il est difficile d'obtenir des fils émaillés dont la souplesse et la résistance chimique soient à la fois tout à fait satisfaisantes.

La Demanderesse a proposé dans sa demande de brevet FR-A-2 622 892 des vernis à base de polyamide-imides, dans lesquels l'acide polycarboxylique aromatique, ou anhydride correspondant, condensé avec un diisocyanate aromatique, était remplacé pour partie par un diacide aliphatique ou cycloaliphatique et/ou un ester ou éther à base de diacide aliphatique ou cycloaliphatique, en vue de la fabrication d'une surcouche thermoadhérente sur émail isolant de conducteur électrique. Il n'était cependant pas prévu d'appliquer de tels vernis à l'isolation de conducteurs méplats ou de gros diamètre, le but recherché étant d'obtenir de bonnes thermoadhérence entre fils et adhérence sur le substrat formé par un émail sousjacent.

La présente invention a pour but d'assurer l'isolation de conducteurs méplats ou de gros diamètre par un émail présentant une excellente souplesse et de bonnes résistances chimique et thermique, tout en étant d'un coût peu élevé.

On utilise à cet effet des vernis à base de polyamide-imides, comprenant le produit de condensation d'un isocyanate aromatique, éventuellement additionné d'un isocyanate aliphatique ou cycloaliphatique, avec un acide ou anhydride polycarboxylique aromatique à au moins trois fonctions carboxyliques, additionné d'au moins un composé du groupe formé par les diacides aliphatiques ou cycloaliphatiques, les diacides esters formés à partir desdits diacides et de dialcools aliphatiques et des diacides aliphatiques contenant dans leur structure des ponts éther, en proportion molaire de 10% à 80% de ce composé pour 90% à 20% d'acide ou anhydride polycarboxylique aromatique, à la fabrication d'un émail isolant pour conducteur électrique méplat ou de diamètre supérieur à 1,5 mm.

Cette application répond en outre de préférence à au moins l'une des caractéristiques suivantes :
- La proportion molaire de composé additionnel est de 15% à 45% pour 85% à 55% d'acide ou anhydride polycarboxylique aromatique.
- Lorsque le composé additionnel est constitué au moins en partie par un diacide aliphatique ou cycloaliphatique, ce diacide est à chaîne carbonée contenant de 2 à 36 atomes de carbone, et de préférence de 6 à 14 atomes de carbone.
- Lorsque le composé additionnel est constitué au moins en partie par un diacide ester, celui-ci comporte $(n+1)$ moles de diacide aliphatique pour $n$ moles de dialcool, et de préférence $(n+1)$ moles d'acide adipique pour $n$ moles d'hexane-diol-1,6.
- Lorsque le composé additionnel est formé au moins en partie par un diacide aliphatique contenant dans sa structure des ponts éther, ce composé est de préférence le polymère vendu par la société BASF sous la désignation commerciale "Poly THF dipropionic acid", de formule $HOOC\text{-}(CH_2)_2\text{-}O\text{-}[CH_2CH_2\text{-}CH_2\text{-}CH_2O]_n\text{-}(CH_2)_2COOH$, $n$ pouvant avoir les valeurs 3,5 (masse molaire 350), 14 (masse molaire 1100) ou 28 (masse molaire 2100).

On peut bien entendu utiliser simultanément deux ou trois des genres de composé additionnel définis ci-dessus et à l'intérieur de chacun de ces groupes plusieurs diacides aliphatiques ou cycloaliphatiques, plusieurs diacides esters ou plusieurs diacides aliphatiques contenant dans leur structure des ponts éther.

On additionne en outre avantageusement le mélange réactionnel d'un composé monofonctionnel tel qu'un alcool, notamment l'alcool benzylique, jouant le rôle de limiteur de chaîne, qui réagit initialement avec l'isocyanate pour former un uréthane, en réduisant ainsi la viscosité du vernis, l'uréthane se décomposant ensuite lors de la cuisson du vernis pour former une quantité supplémentaire de polyamide-imide.

L'invention s'étend en outre aux conducteurs électriques méplats ou de gros diamètre, supérieur à 1,5 mm, dont l'émail est obtenu à partir d'un vernis à base de polyamide-imide, comprenant le produit de condensation d'un isocyanate aromatique, éventuellement additionné d'un isocyanate aliphatique ou cycloaliphatique, avec un acide ou anhydride polycarboxylique aromatique à au moins trois fonctions carboxyliques, additionné d'au moins un composé du groupe formé par les diacides aliphatiques ou cycloaliphatiques, les diacides esters formés à partir desdits diacides et de dialcools aliphatiques, et des diacides aliphatiques contenant dans leur structure des ponts éther, en proportion molaire de 10% à 80% de ce composé pour 90% à 20% d'acide ou anhydride polycarboxylique aromatique, et de préférence de 15% à 45% de ce composé pour 85% à 55% d'acide ou anhydride polycarboxylique aromatique.

Ces conducteurs électriques répondent de préférence aux conditions indiquées ci-dessus pour le composé additionnel pour l'application des vernis précédemment définis à leur fabrication.

Il est décrit ci-après à titre d'exemple la fabrication de vernis pour conducteurs méplats ou de gros diamètre, et les propriétés physiques, mécaniques et électriques d'émaux de conducteurs méplats obtenus par cuisson de tels vernis.

Exemple 1

Dans un ballon de deux litres muni d'un agitateur, d'un thermomètre et équipé d'un condenseur vertical, on introduit successivement

- 574,2 g de N-méthyl-pyrrolidone, qui sera désignée ci-après par l'abréviation NMP,
- 162,38 g (0,84575 mole) d'anhydride trimellitique (désigné ci-après par l'abréviation TMA),
- 55,82 g (0,14925 mole) de diacide-ester, produit de la réaction de 2 moles d'acide adipique sur un mole d'hexane-diol-1,6,
- 2,16 g (0,02 mole) d'alcool benzylique,
- 250 g (1 mole) de 4,4'-diisocyanate de diphénylméthane (désigné ci-après par l'abréviation MDI).

On élève progressivement la température à 90°C en 2 heures. La réaction débute vers 80°C, avec un dégagement gazeux (anhydride carbonique). On observe un palier à 90°C pendant 2 heures. On relève progressivement la température à 120°C en une heure, puis observe un palier de 2 heures à 120°C. On élève enfin la température à 145°C en une heure. On maintient celle-ci à 145°-150°C jusqu'à obtention du degré de condensation souhaité (dégagement d'environ 97% de la masse théorique d'anhydride carbonique, soit de 85 g). On refroidit à 120°C et dilue par un mélange de 230 g de xylène et 230 g de solvant commercialisé sous la désignation RPDE par la société Rhône-Poulenc (constitué par un mélange de diesters méthyliques des acides glutarique, succinique et adipique, de formule générale $CH_3\ CO_2$-$(CH_2)$n-$CO_2\ CH_3$). On obtient un vernis présentant les caractéristiques physiques suivantes :

- Teneur en matière sèche 27 %
- Viscosité Baumé à 20°C 2500 mPas.

Exemple 2

On suit le même mode opératoire que dans l'exemple 1, mais en modifiant les réactifs et leurs quantités comme suit, en introduisant successivement dans le ballon

- 570,31 g de NMP,
- 161,58 g (0,84159 mole) de TMA,
- 34,16 g (0,14851 mole) d'acide dodécanedioïque,
- 21,60 g (0,20 mole) d'alcool benzylique,
- 250 g (1 mole) de MDI.

On dilue par un mélange de 228,83 g de xylène et 228,83 g de solvant RPDE.

Le vernis obtenu a une teneur en matière sèche de 27% et une viscosité Baumé à 20°C de 500 mPas.

Exemple 3

On suit le même mode opératoire que celui de l'exemple 1, en introduisant dans l'ordre ci-après les quantités suivantes des constituants du mélange réactionnel :

- 735,30 g de NMP,
- 163,20 g (0,85 mode) de TMA,
- 165,00 g (0,15 mode) de polymère "Poly THF dipropionic acid", de formule $HOOC$-$(CH_2)_2$-$O$-$[(CH_2)_4$-$O$-$]_{14}$-$(CH_2)_2$-$COOH$ de masse molaire 1100,
- 250,00 g (1 mole) de MDI.

On dilue par un mélange de 295 g de xylène et 295 g de solvant RPDE.

Le vernis obtenu a une teneur en matière sèche de 27% et une viscosité Baumé à 20°C de 3000 mPas.

Exemple 4

Suivant le même mode opératoire que dans l'exemple 1, on introduit successivement, puis fait réagir les constituants suivants :
- 446,83 g de NMP,
- 111,73 g de xylène,
- 133,73 g (0,69650 mole) de TMA,
- 52,24 g (0,14925 mole) du polymère "Poly THF dipropionic acid", de formule HOOC-$(CH_2)_2$-O-$[CH_2)$-$_4$-O$]_{3,5}$-$(CH_2)_2$-COOH,
- 21,70 g (0,14925 mole) d'acide adipique,
- 2,16 g (0,02 mode) d'alcool benzylique,
- 250,00 g (1 mole) de MDI.
On dilue par un mélange de 179,20 g de xylène et 268,92 g d'isophorone.
Le vernis obtenu a une teneur en matière sèche de 27% et une viscosité Baumé à 20°C de 2700 mPas.

Exemple 5

On observe le même mode opératoire que dans l'exemple 1, en introduisant successivement les quantités suivantes du mélange réactionnel :
- 388,44 g de NMP,
- 166,47 g de xylène,
- 76,42 g (0,398 mode) de TMA,
- 99,10 g (0,1194 mode) de diacides esters produits par la réaction de 4 modes d'acide adipique sur 3 modes d'hexane-diol-1,6,
- 41,79 g (0,1194 mode) du polymère "Poly THF dipropionic acid", de formule HOOC-$(CH_2)_2$-O-$[(CH_2)$-$_4$-O$]_{3,5}$-$(CH_2)_2$-COOH, de masse molaire 350,
- 44,65 g (0,1194 mode) de diacides esters obtenus par la réaction de 2 modes d'acide adipique sur un mode d'hexane-diol-1,6,
- 27,46 g (0,1194 g) d'acide dodécanedioïque,
- 2,16 g (0,02 mode) d'alcool benzylique,
- 250,00 g (1 mode) de MDI.
On dilue par un mélange de 144,13 g de xylène et 144,14 g de solvant RPDE.
Le vernis obtenu a une teneur en matière sèche de 35% et une viscosité Baumé à 20°C de 3500 mPas.

Exemple 6

On observe le même mode opératoire que dans l'exemple 1, en introduisant successivement dans de mélange réactionnel initial :
- 443,71 g de NMP,
- 190,16 g de xylène,
- 47,53 g (0,24755 mole) de TMA,
- 123,26 g (0,14851 mole) du même diacide ester que dans l'exemple 5 (à 4 modes d'acide adipique pour 3 modes d'hexane-diol-1,6),
- 51,98 g (0,14851 mole) du polymère "Poly THF dipropionic acid", de formule HOOC-$(CH_2)_2$-O-$[(CH_2)$-$_4$-O$]_{3,5}$-$(CH_2)_2$-COOH, de masse molaire 350,
- 55,54 g (0,14851) de diacides esters obtenus par la réaction de 2 modes d'acide adipique sur un mode d'hexane-diol-1,6,
- 34,16 g (0,14851 mole) d'acide dodécanedioïque,
- 21,68 g (0,14851 mole) d'acide adipique,
- 21,60 (0,2 mode) d'alcool benzylique,
- 250,00 g (1 mode) de MDI.
On dilue par un mélange de 164,64 g de xylène et 164,64 g d'isophorone.
Le vernis obtenu a une teneur en matière sèche de 35% et une viscosité Baumé à 20°C de 1500 mPas.

4

Les vernis obtenus dans des exemples 1 à 6 ont été appliqués sur des conducteurs en cuivre de section rectangulaire (méplats) sur des machines à émailler industrielles à recyclage, dans les conditions utilisées habituellement dans l'industrie. Ils ont ensuite été contrôlés selon les normes des publications 851, 1985 (Méthodes d'essais) et 317.16, 1988 (Spécification : sanctions) de la Commission électrotechnique internationale (CEI). Ces essais ont donné les résultats suivants :

**Tableau des Résultats**

| ESSAIS | SANCTIONS | EX. 1 | EX. 2 | EX. 3 | EX. 4 | EX. 5 | EX. 6 |
|---|---|---|---|---|---|---|---|
| Dimension Largeur L épaisseur e | | 5mm / 2mm | 5mm / 2mm | 5mm / 2mm | 5mm / 2mm | 5mm / 2mm | 5mm / 2mm |
| Surépaisseur | | 0,12mm | 0,13mm | 0,13mm | 0,12mm | 0,13mm | 0,13mm |
| Aspect de l'émail | | Lisse | Lisse | Lisse | Lisse | Lisse | Lisse |
| Souplesse au pliage – Surlargeur Allongement 15% sur D = 4 x e | Pas de craquelures | bon | bon | bon | bon | bon | bon |
| – Surépaisseur sur D = 4 x L | Pas de décollement supérieur à 5mm | bon | bon | bon | bon | bon | bon |
| – Surépaisseur sur D = 4 x e | Pas de craquelures | bon | bon | bon | bon | bon | bon |
| Choc thermique 180°C Surépaisseur sur D = 6 x e | Pas de craquelures | bon | bon | bon | bon | bon | bon |
| Tension de claquage dans grenaille par pliage-surépaisseur sur D = 25 mm | > 2000 < | bon | bon | bon | bon | bon | bon |

**Revendications**

1. Application d'un vernis à base de polyamide-imide à la fabrication d'émaux isolants pour conducteurs électriques méplats ou de diamètre supérieur à 1,5 mm, dans laquelle le vernis comprend le produit de condensation d'un isocyanate aromatique, éventuellement additionné d'un isocyanate aliphatique ou cycloaliphatique, avec un acide ou anhydride polycarboxylique aromatique à au moins trois fonctions carboxyliques, additionné d'au moins un composé du groupe formé par les diacides aliphatiques ou cycloaliphatiques, les diacides esters formés à partir desdits diacides et de dialcools aliphatiques et des diacides aliphatiques contenant dans leur structure des ponts éther, en proportion molaire de 10% à 80% de ce composé pour 90% à 20% d'acide ou anhydride polycarboxylique aromatique.

2. Application selon la revendication 1, caractérisée en ce que la proportion molaire de composé additionnel est de 15% à 45% pour 85% à 55% d'acide ou anhydride polycarboxylique aromatique.

3. Application selon les revendications 1 ou 2, caractérisée en ce que les diacides aliphatiques ou cycloaliphatiques sont à chaîne carbonée contenant de 2 à 36 atomes de carbone, et de préférence de 6 à 14 atomes de carbone.

4. Application selon l'une des revendications 1 à 3, caractérisée en ce que les diacides esters sont obtenus par estérification de n modes de dialcool aliphatique par (n + 1) modes de diacide aliphatique ou cycloaliphatique, et de préférence de n modes d'hexane-diol-1,6 par (n + 1) modes d'acide adipique.

5. Application selon l'une des revendications 1 à 4, caractérisée en ce que des diacides aliphatiques contenant dans leur structure des ponts éther sont constitués par des composés de formule générale $HOOC-(CH_2)n-O-[(CH_2)_4-O]_n-(CH_2)_2-COOH$, dans laquelle n est compris de préférence entre 3,5 et 28.

6. Application selon l'une des revendications 1 à 5, caractérisée en ce que de mélange soumis à la condensation comprend en outre un composé monofonctionnel limiteur de chaîne, de préférence un alcool primaire.

7. Conducteurs électriques méplats ou de diamètre supérieur à 1,5 mm isolés, caractérisés en ce que leur émail est obtenu à partir d'un vernis à base de polyamide-imide, comprenant le produit de condensation d'un isocyanate aromatique, éventuellement additionné d'un isocyanate aliphatique ou cycloaliphatique, avec un acide ou anhydride polycarboxylique aromatique à au moins trois fonctions carboxyliques, additionné d'au moins un composé du groupe formé par les diacides aliphatiques ou cycloaliphatiques, les diacides esters formés à partir desdits diacides et de dialcools aliphatiques, et des diacides aliphatiques contenant dans leur structure des ponts éther, en proportion molaire de 10% à 80% de ce composé pour 90% à 20% d'acide ou anhydride polycarboxylique aromatique.

8. Conducteurs électriques méplats ou de diamètre supérieur à 1,5 mm isolés selon la revendication 6, caractérisés en ce que la proportion molaire dans l'émail du composé additionnel est comprise entre 15% et 45% pour 85% à 55% d'acide ou anhydride polycarboxylique aromatique à au moins trois fonctions carboxyles.

9. Conducteurs électriques selon les revendications 6 ou 7, dans lesquels le composé additionnel est formé au moins en partie par un diacide aliphatique ou cycloaliphatique, caractérisés en ce que ce diacide est à chaîne carbonée contenant de 2 à 36 atomes de carbone, et de préférence de 6 à 14 atomes de carbone.

10. Conducteurs électriques selon l'une des revendications 6 à 8, dans lesquels le composé additionnel est formé au moins en partie par un diacide ester, caractérisés en ce que ce diacide ester comporte (n + 1) moles de diacide aliphatique pour n moles de dialcool, et de préférence (n + 1) moles d'acide adipique pour n moles d'hexane-diol-1,6.

11. Conducteurs électriques selon l'une des revendications 6 à 9, dans lesquels le composé additionnel est formé au moins en partie par un diacide aliphatique contenant dans sa structure des ponts éther, caractérisés en ce que ledit diacide répond à la formule générale $HOOC-(CH_2)_2-O-[(CH_2)_4-O]_n-(CH_2)_2-COOH$, dans laquelle n est compris de préférence entre 3,5 et 28.

Office européen
des brevets

**RAPPORT DE RECHERCHE EUROPEENNE**

Numero de la demande

EP    91 11 8335

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 512 826 (HITACHI) <br> * page 1, ligne 32 - page 2, ligne 6 * <br> * page 7, ligne 22 - ligne 30; revendications 1-15 * <br> --- | 1-11 | H01B3/30 <br> C08G73/14 <br> C08G18/34 |
| A | GB-A-2 108 982 (SCHENECTADY-MIDLAND) <br> --- | | |
| A | EP-A-0 226 968 (DR. BECK) <br> --- | | |
| A | US-A-4 408 032 (G. H. SOLLNER) <br> --- | | |
| A | US-A-3 884 880 (D. R. DISQUE) <br> --- | | |
| D,A | EP-A-0 315 925 (ALSTHOM) <br> ----- | | |

**DOMAINES TECHNIQUES RECHERCHES (Int. Cl.5)**

H01B
C08G

Le présent rapport a été établi pour toutes les revendications

| Lieu de la recherche | Date d'achèvement de la recherche | Examinateur |
|---|---|---|
| LA HAYE | 27 FEVRIER 1992 | STIENON P.M.E. |

EPO FORM 1503 03.82 (P0402)